(19) Europäisches Patentamt
European Patent Office
Office européen des brevets

(11) EP 3 680 271 A1

(12) # EUROPEAN PATENT APPLICATION
published in accordance with Art. 153(4) EPC

(43) Date of publication:
**15.07.2020 Bulletin 2020/29**

(21) Application number: **18849982.6**

(22) Date of filing: **03.09.2018**

(51) Int Cl.:
***C08G 64/02*** *(2006.01)* ***C08K 3/00*** *(2018.01)*
***C08L 69/00*** *(2006.01)*

(86) International application number:
**PCT/JP2018/032541**

(87) International publication number:
**WO 2019/045092 (07.03.2019 Gazette 2019/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.09.2017 JP 2017169824**

(71) Applicants:
- **National University Corporation Tokyo University of Agriculture and Technology Tokyo 183-8538 (JP)**
- **Sumitomo Seika Chemicals Co., Ltd. Kako-gun, Hyogo 675-0145 (JP)**

(72) Inventors:
- **NAKANO, Koji Fuchu-shi Tokyo 183-8538 (JP)**
- **NISHIOKA, Kiyoshi Himeji-shi Hyogo 672-8076 (JP)**

(74) Representative: **Vossius & Partner Patentanwälte Rechtsanwälte mbB Siebertstrasse 3 81675 München (DE)**

(54) **NOVEL ALIPHATIC POLYCARBONATE**

(57) The present invention provides an aliphatic polycarbonate that can be thermally decomposed (dewaxed) at a relatively low temperature. The aliphatic polycarbonate comprises a constituent unit represented by formula (1):

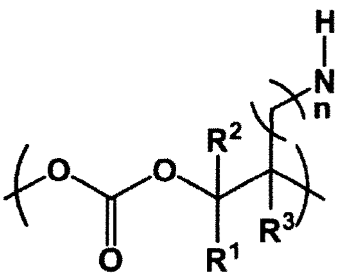

(1)

wherein $R^1$, $R^2$, and $R^3$ are identical or different, and each represent a hydrogen atom, a substituted or unsubstituted alkyl group having 1 to 15 carbon atoms, or a substituted or unsubstituted aryl group having 6 to 20 carbon atoms; $R^4$ represents a substituted or unsubstituted alkyl group having 1 to 20 carbon atoms, or a substituted or unsubstituted aryl group having 6 to 20 carbon atoms; and n is an integer of 0 to 3.

EP 3 680 271 A1

Fig. 1

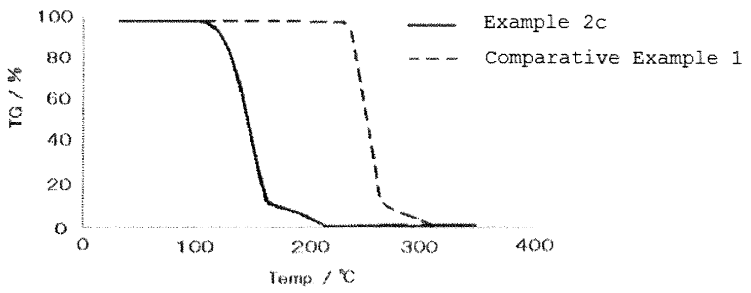
Example 2c
Comparative Example 1
TG / %
100
80
60
40
20
0
0
100
200
300
400
Temp / ℃

## Description

Technical Field

The present invention relates to an aliphatic polycarbonate having a novel structure, a thermally decomposable binder comprising the aliphatic polycarbonate, a slurry composition comprising the aliphatic polycarbonate, and the like.

Background Art

A slurry composition obtained by dispersing fine particles of an inorganic compound in a solvent together with a binder resin is used for obtaining sintered bodies having various shapes. For example, a slurry composition comprising a binder resin and fine particles of metals, such as silver, copper, and nickel, is used for forming a circuit on a substrate or forming an electrode. A slurry composition comprising a binder resin and fine particles of ceramics, such as alumina, zirconia, barium titanate, and silicon carbide, is used for forming electronic devices.

The binder resin is removed by thermal decomposition in a dewaxing step after molding. As the binder resin, cellulose resin, butyral resin, acrylic resin, etc., are typically used. However, these resins have a decomposition temperature of 400°C or higher; and an insufficient dewaxing temperature results in a large amount of residual carbon, which may adversely affect the performance of products. Accordingly, a great deal of heat energy is used to reduce residual carbon. In view of this, the development of a binder resin that is thermally decomposed with a small amount of energy, in other words, at a temperature lower than before, is desired.

Aliphatic polycarbonates are produced from carbon dioxide and epoxide. Since aliphatic polycarbonates have a decomposition temperature as low as less than 300°C and substantially no carbon residue, the use of an aliphatic polycarbonate as a binder resin has been discussed. Several attempts, such as changing the molecular structure of the aliphatic polycarbonate or adding an additive, have been recently made to attain an even lower thermal decomposition temperature. Patent Literature 1, for example, discloses that the decomposition temperature can be lowered by adding a salt comprising an organic cation having a specific structure. Patent Literature 2 discloses that the addition of a photoacid generator and light irradiation have an effect of lowering the decomposition temperature.

Citation List

Patent Literature

PTL 1: JP Patent No. 5781939
PTL 2: JP2010-106286A

Summary of Invention

Technical Problem

In the process of studying a binder resin comprising the aliphatic polycarbonate, the present inventor found that the application of the technology for lowering the decomposition temperature of the aliphatic polycarbonate described in the aforementioned patent literature may cause problems in the storage stability or processability of the resin. More specifically, the inventor found that the molecular weight may be reduced while the resin is stored for a long time; and that even when the temperature is below the decomposition temperature, resin decomposition may occur, for example, when the resin is exposed to a temperature of 70°C for one hour or more. To avoid the above problems, it is necessary to control the temperature so that the temperature is not increased until immediately before a thermal decomposition step; and it is also necessary to subject a resin to a thermal decomposition step in as short a time as possible, by homogeneously mixing an additive just before use. Accordingly, there is a limitation on the application of the technology to a process in the field of manufacturing a product using a binder resin containing an aliphatic polycarbonate.

The present invention was made in light of the above problems. The present invention provides an aliphatic polycarbonate in which resin decomposition does not occur, even when the resin is exposed to an environment at a temperature (e.g., about 70°C) relatively higher than ordinary temperature for a long period of time, and thermal decomposition can be performed at a temperature (e.g., less than 200°C) that is relatively low as a resin decomposition temperature.

Solution to Problem

The present inventor found that an aliphatic polycarbonate having a specific structure makes it possible for the resin to not decompose, even when exposed to an environment at a temperature relatively higher than ordinary temperature for a long period of time; and for the thermal decomposition to be performed at a temperature that is relatively low as a resin decomposition temperature. As a result of extensive research, the inventor accomplished the present invention.

The present invention encompasses, for example, the subject matter of the following items.

Item 1. An aliphatic polycarbonate having a secondary amino group in a side chain.

Item 2. The aliphatic polycarbonate according to Item 1, which comprises a constituent unit represented by formula (1):

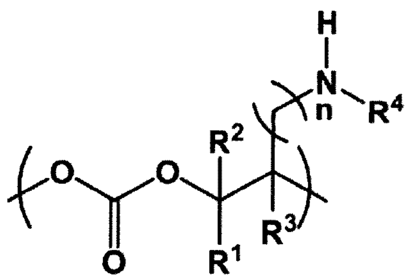
(1)

wherein $R^1$, $R^2$, and $R^3$ are identical or different, and each represent a hydrogen atom, a substituted or unsubstituted alkyl group having 1 to 15 carbon atoms, or a substituted or unsubstituted aryl group having 6 to 20 carbon atoms; $R^4$ represents a substituted or unsubstituted alkyl group having 1 to 20 carbon atoms, or a substituted or unsubstituted aryl group having 6 to 20 carbon atoms; and n is an integer of 0 to 3.

Item 3. The aliphatic polycarbonate according to Item 1 or 2, which further comprises a constituent unit represented by formula (2):

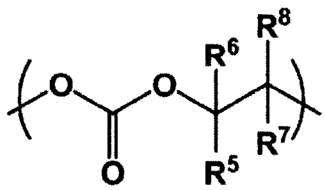
(2)

wherein $R^5$, $R^6$, $R^7$, and $R^8$ are identical or different, and each represent a hydrogen atom, a substituted or unsubstituted alkyl group having 1 to 15 carbon atoms, or a substituted or unsubstituted aryl group having 6 to 20 carbon atoms, wherein two groups from among $R^5$ to $R^8$, taken together with the carbon atom or carbon atoms to which these groups are attached, may form a substituted or unsubstituted, saturated or unsaturated aliphatic ring.

Item 4. The aliphatic polycarbonate according to any one of Items 1 to 3, wherein the proportion of the constituent unit represented by formula (1) is 0.1% by mole or more to 30% by mole or less, based on the entire constituent units constituting the aliphatic polycarbonate.

Item 5. The aliphatic polycarbonate according to any one of Items 1 to 4, wherein $R^4$ is a secondary or tertiary alkyl group having 3 to 20 carbon atoms.

Item 6. The aliphatic polycarbonate according to any one of Items 1 to 5, wherein n is 1.

Item 7. A thermally decomposable binder comprising the aliphatic polycarbonate according to any one of Items 1 to 6.

Item 8. A slurry composition comprising the aliphatic polycarbonate according to any one of Items 1 to 6, a solvent, and inorganic particles.

Advantageous Effects of Invention

The aliphatic polycarbonate according to the present invention is thermally decomposable at a relatively low temperature. Thus, when used as a thermally decomposable binder, the aliphatic polycarbonate can be thermally decomposed (dewaxed) at a low temperature, which accordingly enables significant reduction in heat energy. In addition, since the aliphatic polycarbonate can be thermally decomposed (dewaxed) even in a non-oxidative atmosphere, the aliphatic polycarbonate can be dewaxed in a non-oxidative atmosphere, even when containing inorganic particles that may be reacted with oxygen.

Brief Description of Drawings

Fig. 1 shows the thermogravimetric curve of the aliphatic polycarbonate obtained in Example 2b, and the thermogravimetric curve of the aliphatic polycarbonate obtained in Comparative Example 1.

Description of Embodiments

Each embodiment of the present invention will be described below in more detail.

The aliphatic polycarbonate encompassed by the present invention (hereinafter sometimes referred to as "aliphatic polycarbonate of the present invention" in the present specification) comprises a constituent unit represented by formula (1):

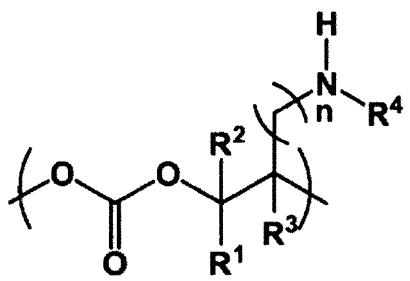

(1)

wherein $R^1$, $R^2$, and $R^3$ are identical or different, and each represent a hydrogen atom, a substituted or unsubstituted alkyl group having 1 to 15 carbon atoms, or a substituted or unsubstituted aryl group having 6 to 20 carbon atoms; $R^4$ represents a substituted or unsubstituted alkyl group having 1 to 20 carbon atoms, or a substituted or unsubstituted aryl group having 6 to 20 carbon atoms; and n is an integer of 0 to 3. As is clear from formula (1), the constituent unit (constituent unit (1)) has a secondary amino group in a side chain. The side chain is bonded to the main chain directly or via an alkylene group having 1, 2, or 3 carbon atoms. The aliphatic polycarbonate of the present invention is decomposed at a relatively low temperature, and attains high storage stability because it contains constituent unit (1).

As stated above, $R^1$, $R^2$, and $R^3$ are identical or different. Specifically, it is possible that $R^1$, $R^2$, and $R^3$ are all identical; that $R^1$ and $R^2$ are identical, while $R^3$ is different; that $R^2$ and $R^3$ are identical, while $R^1$ is different; or that $R^1$, $R^2$, and $R^3$ are all different.

The alkyl group represented by $R^1$, $R^2$, and $R^3$ is a linear or branched alkyl group having 1, 2, 3, 4, 5, 6, 7, 8, 9, 10, 11, 12, 13, 14, or 15 carbon atoms. The number of carbon atoms is preferably 1 to 10, more preferably 1 to 8, even more preferably 1 to 6, and still more preferably 1 to 4. Specific examples include a methyl group, ethyl group, n-propyl group, isopropyl group, n-butyl group, sec-butyl group, tert-butyl group, n-pentyl group, n-hexyl group, n-heptyl group, n-octyl group, n-nonyl group, n-decyl group, and the like.

The alkyl group represented by $R^1$, $R^2$, or $R^3$ may be substituted with one or more substituents. Examples of the substituents in the alkyl group represented by $R^1$, $R^2$, or $R^3$ include an alkoxy group, acyloxy group, silyl group, sulfanyl group, cyano group, nitro group, sulfo group, formyl group, aryl group, and halogen atom (e.g., a fluorine atom, chlorine atom, bromine atom, and iodine atom). Examples of the alkoxy group herein include a methoxy group, ethoxy group, isopropoxy group, and tert-butoxy group. Examples of the acyloxy group include an acetoxy group, propionyloxy group, butyryloxy group, isobutyryloxy group, pivaloyloxy group, and benzoyloxy group. Examples of the silyl group include a trimethylsilyl group, triethylsilyl group, triisopropylsilyl group, trimethoxysilyl group, dimethoxymethylsilyl group, and methoxydimethylsilyl group. Examples of the aryl group include a phenyl group, o-tolyl group, m-tolyl group, p-tolyl group, naphthyl group, and indenyl group.

The aryl group represented by $R^1$, $R^2$, or $R^3$ is an aryl group having 6, 7, 8, 9, 10, 11, 12, 13, 14, 15, 16, 17, 18, 19, or 20 carbon atoms, and preferably an aryl group having 6 to 14 carbon atoms. Specific examples include a phenyl group, indenyl group, naphthyl group, tetrahydronaphthyl group, and the like.

The aryl group represented by $R^1$, $R^2$, or $R^3$ may be substituted with one or more substituents. Examples of the substituent in the aryl group include an alkyl group, aryl group, alkoxy group, acyloxy group, silyl group, sulfanyl group, cyano group, nitro group, sulfo group, formyl group, halogen atom (e.g., fluorine atom, chlorine atom, bromine atom, and iodine atom), and the like. Examples of the alkyl group herein include a methyl group, ethyl group, n-propyl group, isopropyl group, n-butyl group, sec-butyl group, tert-butyl group, and the like. Examples of the aryl group include a phenyl group, o-tolyl group, m-tolyl group, p-tolyl group, naphthyl group, and indenyl group. Examples of the alkoxy group include a methoxy group, ethoxy group, isopropoxy group, and tert-butoxy group. Examples of the acyloxy group include an acetoxy group, propionyloxy group, butyryloxy group, isobutyryloxy group, pivaloyloxy group, and benzoyloxy group. Examples of the silyl group include a trimethylsilyl group, triethylsilyl group, triisopropylsilyl group, trimethoxysilyl group, dimethoxymethylsilyl group, and methoxydimethylsilyl group.

Although there is no particular limitation, it is preferable that $R^1$, $R^2$, and $R^3$ are identical or different, and are each a hydrogen atom or an alkyl group having 1 to 4 carbon atoms. Of these, $R^1$, $R^2$, and $R^3$ are preferably hydrogen atoms.

The alkyl group represented by $R^4$ is a linear or branched alkyl group having 1 to 20 carbon atoms (1, 2, 3, 4, 5, 6, 7, 8, 9, 10, 11, 12, 13, 14, 15, 16, 17, 18, 19 or 20). The number of carbon atoms is preferably 1 to 10. Specific examples include a methyl group, ethyl group, n-propyl group, isopropyl group, n-butyl group, sec-butyl group, tert-butyl group, n-pentyl group, cyclopentyl group, neopentyl group, isopentyl group, tert-pentyl group, n-hexyl group, n-heptyl group, n-octyl group, 2-ethylhexyl group, n-nonyl group, n-decyl group, 1-adamantyl group, 2-adamantyl group, and the like.

The alkyl group represented by $R^4$ may be substituted with one or more substituents. Examples of substituents in the alkyl group represented by $R^4$ include an alkoxy group, acyloxy group, silyl group, sulfanyl group, cyano group, nitro group, sulfo group, formyl group, aryl group, and halogen atom (e.g., a fluorine atom, chlorine atom, bromine atom, and iodine atom). Examples of the alkoxy group herein include a methoxy group, ethoxy group, isopropoxy group, and tert-butoxy group. Examples of the acyloxy group include an acetoxy group, propionyloxy group, butyryloxy group, isobutyryloxy group, pivaloyloxy group, and benzoyloxy group. Examples of the silyl group include a trimethylsilyl group, triethylsilyl group, triisopropylsilyl group, trimethoxysilyl group, dimethoxymethylsilyl group, and methoxydimethylsilyl group. Examples of the aryl group include a phenyl group, o-tolyl group, m-tolyl group, p-tolyl group, naphthyl group, and indenyl group.

The number of carbon atoms of the aryl group represented by $R^4$ is 6, 7, 8, 9, 10, 11, 12, 13, 14, 15, 16, 17, 18, 19, or 20; and is preferably 6 to 10. Examples of the aryl group include a phenyl group, indenyl group, naphthyl group, and tetrahydronaphthyl group.

The aryl group represented by $R^4$ may be substituted with a substituent. Examples of the substituent in the aryl group include an alkyl group, aryl group, alkoxy group, acyloxy group, silyl group, sulfanyl group, cyano group, nitro group, sulfo group, formyl group, halogen atom (e.g., fluorine atom, chlorine atom, bromine atom, and iodine atom), and the like. The aryl group may be substituted with one or more substituents. Examples of the alkyl group herein include a methyl group, ethyl group, n-propyl group, isopropyl group, n-butyl group, sec-butyl group, and tert-butyl group. Examples of the aryl group include a phenyl group, o-tolyl group, m-tolyl group, p-tolyl group, naphthyl group, and indenyl group. Examples of the alkoxy group include a methoxy group, ethoxy group, isopropoxy group, and tert-butoxy group. Examples of the acyloxy group include an acetoxy group, propionyloxy group, butyryloxy group, isobutyryloxy group, pivaloyloxy group, and benzoyloxy group. Examples of the silyl group include a trimethylsilyl group, triethylsilyl group, triisopropylsilyl group, trimethoxysilyl group, dimethoxymethylsilyl group, and methoxydimethylsilyl group.

$R^4$ is more preferably a secondary or tertiary alkyl group having 3 to 20 carbon atoms. Specific examples include an isopropyl group, sec-butyl group, tert-butyl group, cyclopentyl group, isopentyl group, tert-pentyl group, 2-ethylhexyl group, 1-adamantyl group, 2-adamantyl group, and the like.

n represents an integer of 0 to 3, preferably 1 or 2, and particularly preferably 1.

The aliphatic polycarbonate of the present invention may consist only of the constituent unit represented by formula (1). However, in addition to the constituent unit represented by formula (1), the aliphatic polycarbonate of the present invention preferably also comprises a constituent unit (constituent unit (2)) represented by formula (2):

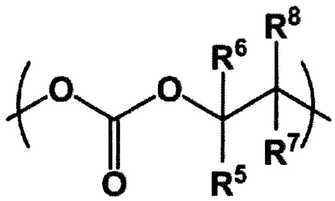

(2)

wherein $R^5$, $R^6$, $R^7$, and $R^8$ are identical or different, and each represent a hydrogen atom, a substituted or unsubstituted

alkyl group having 1 to 15 carbon atoms, or a substituted or unsubstituted aryl group having 6 to 20 carbon atoms; wherein two groups from among $R^5$ to $R^8$, taken together with the carbon atom or carbon atoms to which these groups are attached, may form a substituted or unsubstituted, saturated or unsaturated aliphatic ring.

As stated above, $R^5$, $R^6$, $R^7$, and $R^8$ are identical or different. Specifically, it is possible that $R^5$, $R^6$, $R^7$, and $R^8$ are all identical; that $R^5$, $R^6$, and $R^7$ are identical, while $R^8$ is different; that $R^5$, $R^7$, and $R^8$ are identical, while $R^6$ is different; or that $R^5$, $R^6$, $R^7$, and $R^8$ are all different.

The alkyl group represented by $R^5$, $R^6$, $R^7$, or $R^8$ is a linear or branched alkyl group having 1, 2, 3, 4, 5, 6, 7, 8, 9, 10, 11, 12, 13, 14, or 15 carbon atoms. The number of carbon atoms is preferably 1 to 4. Specific examples include a methyl group, ethyl group, n-propyl group, isopropyl group, n-butyl group, sec-butyl group, tert-butyl group, n-pentyl group, n-hexyl group, n-heptyl group, n-octyl group, n-nonyl group, n-decyl group, and the like.

The alkyl group represented by $R^5$, $R^6$, $R^7$, or $R^8$ may be substituted with a substituent. Examples of the substituent in the alkyl group include an alkoxy group, acyloxy group, silyl group, sulfanyl group, cyano group, nitro group, sulfo group, formyl group, aryl group, and halogen atom (e.g., a fluorine atom, chlorine atom, bromine atom, and iodine atom). The alkyl group may be substituted with one or more substituents. Examples of the alkoxy group herein include a methoxy group, ethoxy group, isopropoxy group, and tert-butoxy group. Examples of the acyloxy group include an acetoxy group, propionyloxy group, butyryloxy group, isobutyryloxy group, pivaloyloxy group, and benzoyloxy group. Examples of the silyl group include a trimethylsilyl group, triethylsilyl group, triisopropylsilyl group, trimethoxysilyl group, dimethoxymethylsilyl group, and methoxydimethylsilyl group. Examples of the aryl group include a phenyl group, o-tolyl group, m-tolyl group, p-tolyl group, naphthyl group, and indenyl group.

The aryl group represented by $R^5$, $R^6$, $R^7$, or $R^8$ is an aryl group having 6, 7, 8, 9, 10, 11, 12, 13, 14, 15, 16, 17, 18, 19 or 20 carbon atoms, and preferably an aryl group having 6 to 14 carbon atoms. Examples of the aryl group include a phenyl group, indenyl group, naphthyl group, and tetrahydronaphthyl group.

The aryl group represented by $R^5$, $R^6$, $R^7$, or $R^8$ may be substituted with a substituent. Examples of the substituent in the aryl group include an alkyl group, aryl group, alkoxy group, acyloxy group, silyl group, sulfanyl group, cyano group, nitro group, sulfo group, formyl group, halogen atom (e.g., fluorine atom, chlorine atom, bromine atom, and iodine atom), and the like. The aryl group may be substituted with one or more substituents. Examples of the alkyl group herein include a methyl group, ethyl group, n-propyl group, isopropyl group, n-butyl group, sec-butyl group, and tert-butyl group. Examples of the aryl group include a phenyl group, o-tolyl group, m-tolyl group, p-tolyl group, naphthyl group, and indenyl group. Examples of the alkoxy group include a methoxy group, ethoxy group, isopropoxy group, and tert-butoxy group. Examples of the acyloxy group include an acetoxy group, propionyloxy group, butyryloxy group, isobutyryloxy group, pivaloyloxy group, and benzoyloxy group. Examples of the silyl group include a trimethylsilyl group, triethylsilyl group, triisopropylsilyl group, trimethoxysilyl group, dimethoxymethylsilyl group, and methoxydimethylsilyl group.

Examples of a substituted or unsubstituted, saturated or unsaturated aliphatic ring formed by binding two groups from among $R^5$, $R^6$, $R^7$, and $R^8$ may be a 3- to 8-membered aliphatic ring that may be substituted with a substituent. Specific examples of the aliphatic ring include a cyclopentane ring, cyclopentene ring, cyclohexane ring, cyclohexene ring, and cycloheptane ring. When the aliphatic ring is substituted with a substituent, examples of the substituent include an alkyl group, aryl group, alkoxy group, acyloxy group, silyl group, sulfanyl group, cyano group, nitro group, sulfo group, formyl group, halogen atom (for example, a fluorine atom, chlorine atom, bromine atom, and iodine atom), and the like. The aliphatic ring may be substituted with one or more substituents. Examples of the alkyl group herein include a methyl group, ethyl group, n-propyl group, isopropyl group, n-butyl group, sec-butyl group, and tert-butyl group. Examples of the aryl group include a phenyl group, o-tolyl group, m-tolyl group, p-tolyl group, naphthyl group, and indenyl group. Examples of the alkoxy group include a methoxy group, ethoxy group, isopropoxy group, and tert-butoxy group. Examples of the acyloxy group include an acetoxy group, propionyloxy group, butyryloxy group, isobutyryloxy group, pivaloyloxy group, and benzoyloxy group. Examples of the silyl group include a trimethylsilyl group, triethylsilyl group, triisopropylsilyl group, trimethoxysilyl group, dimethoxymethylsilyl group, and methoxydimethylsilyl group.

Of these, it is preferable that $R^5$, $R^6$, $R^7$, and $R^8$ be identical or different, and each preferably represent a hydrogen atom or an alkyl group having 1 to 4 carbon atoms. It is particularly preferable that $R^5$, $R^6$, and $R^7$ represent hydrogen atoms, and $R^8$ represent an alkyl group having 1 to 4 carbon atoms. Further, $R^8$ is even more preferably a methyl group or an ethyl group.

When the aliphatic polycarbonate of the present invention comprises the constituent unit represented by formula (2), in addition to the constituent unit represented by formula (1) , it is preferable that $R^1$ and $R^5$ be identical, $R^2$ and $R^6$ be identical, and $R^3$ and $R^7$ be identical; however, there is no particular limitation in this regard.

The aliphatic polycarbonate of the present invention may further comprise a constituent unit other than the constituent unit represented by formula (1) and the constituent unit represented by formula (2), to an extent that the effects of the present invention are not impaired. It is also possible that the aliphatic polycarbonate resin of the present invention consist only of the constituent unit represented by formula (1), or consist only of the constituent unit represented by formula (2).

Examples of the method for producing the aliphatic polycarbonate of the present invention include a method

comprising subjecting an epoxide and carbon dioxide to a polymerization reaction (preferably in the presence of a metal catalyst).

The epoxide used for forming the constituent unit represented by formula (1) is not particularly limited; however, an epoxide having a secondary amino group or an epoxide having a secondary amino group protected by a protecting group is preferably used. Examples of the epoxide having a secondary amino group include N-oxiranyl-N-methylamine, N-oxiranylmethyl-N-methylamine, N-oxiranylethyl-N-methylamine, N-oxiranylpropyl-N-methylamine, N-oxiranyl-N-ethylamine, N-oxiranylmethyl-N-ethylamine, N-oxiranylethyl-N-ethylamine, N-oxiranylpropyl-N-ethylamine, N-oxiranyl-N-propylamine, N-oxiranylmethyl-N-propylamine, N-oxiranylethyl-N-propylamine, N-oxiranylpropyl-N-propylamine, N-oxiranyl-N-isopropylamine, N-oxiranylmethyl-N-isopropylamine, N-oxiranylethyl-N-isopropylamine, N-oxiranylpropyl-N-isopropylamine, N-oxiranyl-N-butylamine, N-oxiranylmethyl-N-butylamine, N-oxiranylethyl-N-butylamine, N-oxiranylpropyl-N-butylamine, N-oxiranyl-N-isobutylamine, N-oxiranylmethyl-N-isobutylamine, N-oxiranylethyl-N-isobutylamine, N-oxiranylpropyl-N-isobutylamine, N-oxiranyl-N-sec-butylamine, N-oxiranylmethyl-N-sec-butylamine, N-oxiranylethyl-N-sec-butylamine, N-oxiranylpropyl-N-sec-butylamine, N-oxiranyl-N-tert-butylamine, N -oxiranylmethyl-N-tert-butylamine, N-oxiranylethyl-N-tert-butylamine, N-oxiranylpropyl-N-tert-butylamine, N-oxiranylaniline, N-oxiranylmethylaniline, N-oxiranylethylaniline, N-oxiranylpropylaniline, and the like. Examples of the epoxide having a secondary amino group protected by a protecting group include epoxides having a secondary amino group protected by an amide group having 1 to 10 carbon atoms, a carbamate group having 1 to 10 carbon atoms, a sulfonamide group having 1 to 10 carbon atoms, or a substituted or unsubstituted benzyl group. Of these, epoxides protected by an acetamide group (e.g., N-oxiranyl-N-methylacetamide, N-oxiranyl-N-isopropylacetamide, N-oxiranyl-N-tert-butylacetamide, N-oxiranylmethyl-N-methylacetamide, N-oxiranylmethyl-N-methylacetamide, N-oxiranylmethyl-N-isopropylacetamide, N-oxiranylmethyl-N-tert-butylacetamide), epoxides protected by a tert-butyl carbamate group (e.g., N-oxiranyl-N-methyl-tert-butyl carbamate, N-oxiranyl-N-isopropyl-tert-butyl carbamate, N-oxiranyl-N-tert-butyl-tert-butylcarbamate, N-oxiranylmethyl-N-methyl-tert-butylcarbamate, N-oxiranylmethyl-N-isopropyl-tert-butylcarbamate, N-oxiranylmethyl-N-tert-butyl-tert-butyl carbamate), epoxides protected by a p-toluenesulfonamide group (e.g., N-oxiranyl-N-methyl-p-toluenesulfonamide, N-oxiranyl-N-isopropyl-p-toluenesulfonamide, N-oxiranyl-N-tert-butyl-p-toluenesulfonamide, N-oxiranylmethyl-N-methyl-p-toluenesulfonamide, N-oxiranylmethyl-N-isopropyl-p-toluenesulfonamide, N-oxiranylmethyl-N-tert-butyl-p-toluenesulfonamide), epoxides protected by a benzyl group (e.g., N-benzyl-N-oxiranyl-N-ethylamine, N-benzyl-N-oxiranyl-N-isopropylamine, N-benzyl-N-oxiranyl-N-tert-butylamine, N-benzyl-N-oxiranylmethyl-N-ethylamine, N-benzyl-N-oxiranylmethyl-N-isopropylamine, N-benzyl-N-oxiranylmethyl-N-tert-butylamine), epoxides protected by a p-methoxybenzyl group (e.g., N-p-methoxybenzyl-N-oxiranyl-N-methylamine, N-p-methoxybenzyl-N-oxiranyl-N-isopropylamine, N-p-methoxybenzyl-N-oxiranyl-N-tert-butylamine, N-p-methoxybenzyl-N-oxiranylmethyl-N-methylamine, N-p-methoxybenzyl-N-oxiranylmethyl-N-isopropylamine, N-p-methoxybenzyl-N-oxiranylmethyl-N-tert-butylamine), and the like.

The epoxide mentioned above is copolymerized with carbon dioxide (in the case when an epoxide having a protected secondary amino group is used, a precursor of an amino group-containing polycarbonate resin in which the secondary amino group is protected is obtained, and then an appropriate deprotection reaction is performed) to give an aliphatic polycarbonate comprising the constituent unit represented by formula (1). From the viewpoint of high polymerization reactivity, it is preferable that an appropriate deprotection reaction be performed after a precursor of an amino group-containing polycarbonate resin having a protected secondary amino group is obtained using an epoxide having a protected secondary amino group. In particular, from the viewpoint of ease of synthesis, preferred is a method in which, using an epoxide protected by a protective group, such as a benzyl group, tert-butyl carbamate group, or p-methoxybenzyl group, deprotection is carried out by a hydrogenation reaction, an acid decomposition reaction, or an oxidation reaction.

Examples of the epoxide usable for forming the constituent unit represented by formula (2) include ethylene oxide, propylene oxide, 1-butene oxide, 2-butene oxide, isobutylene oxide, 1-pentene oxide, 2-pentene oxide, 1-hexene oxide, 1-octene oxide, 1-dodecene oxide, cyclopentene oxide, cyclohexene oxide, styrene oxide, vinylcyclohexane oxide, 3-phenylpropylene oxide, 3,3,3-trifluoropropylene oxide, 3-naphthylpropylene oxide, 3-phenoxypropylene oxide, 3-naphthoxypropylene oxide, butadiene monoxide, 3-vinyloxypropylene oxide, 3-trimethylsilyloxypropylene oxide, and the like. Of these, propylene oxide is preferred from the viewpoint of having high reactivity

When a metal catalyst is used, examples of the metal catalyst include zinc-based catalysts, magnesium-based catalysts, aluminum-based catalysts, chromium-based catalysts, cobalt-based catalysts, nickel-based catalysts, and the like. Of these, zinc-based catalysts and cobalt-based catalysts are preferred because of their high polymerization activity and wide monomer applicability in the polymerization reaction of an epoxide and carbon dioxide.

Examples of the zinc-based catalyst include organozinc catalysts, such as zinc acetate, diethylzinc, and dibutylzinc; organozinc catalysts obtainable by reacting a zinc compound with a compound such as water, diol, a primary amine, a dihydric phenol, an aromatic dicarboxylic acid, an aromatic hydroxy carbonic acid, an aliphatic dicarboxylic acid, an aliphatic hydroxycarboxylic acid, an aliphatic monocarboxylic acid, or an aliphatic amino acid; and the like. Among these organozinc catalysts, organozinc catalysts obtainable by reacting a zinc compound, an aliphatic dicarboxylic acid, and an aliphatic monocarboxylic acid are preferred; and organozinc catalysts obtainable by reacting zinc oxide, glutaric acid, and acetic acid are more preferred, because of their even higher polymerization activity.

Examples of the cobalt-based catalyst include a cobalt complex represented by formula (3):

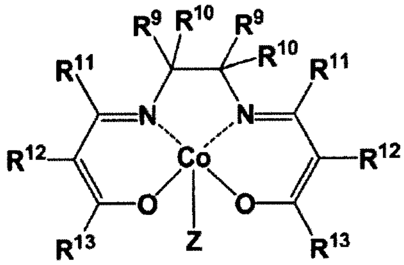

(3)

wherein $R^9$ and $R^{10}$ are identical or different, and each represent a hydrogen atom, a substituted or unsubstituted alkyl group, a substituted or unsubstituted aromatic group, or a substituted or unsubstituted aromatic heterocyclic ring group, or two $R^9$s or two $R^{10}$s taken together may form a substituted or unsubstituted, saturated or unsaturated aliphatic ring; $R^{11}$, $R^{12}$, and $R^{13}$ are identical or different, and each represent a hydrogen atom, a substituted or unsubstituted alkyl group, a substituted or unsubstituted alkenyl group, a substituted or unsubstituted aromatic group, a substituted or unsubstituted aromatic heterocyclic ring group, a substituted or unsubstituted alkoxy group, a substituted or unsubstituted acyl group, a substituted or unsubstituted alkoxycarbonyl group, a substituted or unsubstituted aromatic oxycarbonyl group, or a substituted or unsubstituted aralkyloxycarbonyl group, or $R^{12}$ and $R^{13}$ attached to adjacent carbon atoms taken together may form a substituted or unsubstituted aliphatic ring or a substituted or unsubstituted aromatic ring; and Z is an anionic ligand selected from the group consisting of $F^-$, $Cl^-$, $Br^-$, $I^-$, $N_3^-$, $CF_3SO_3^-$, p-$CH_3C_6H_4SO_3^-$, $BF_4^-$, $NO_2^-$, $NO_3^-$, $OH^-$, $PF_6^-$, $BPh_4^-$, $SbF_6^-$, $ClO_4^-$, an aliphatic carboxylate, an aromatic carboxylate, an alkoxide, and an aromatic oxide.

Among the cobalt complexes represented by formula (3), preferred is a cobalt complex represented by formula (4):

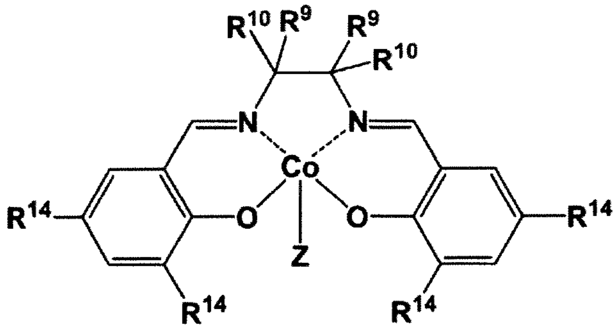

(4)

wherein $R^9$ and $R^{10}$ are identical or different, and each represent a hydrogen atom, a substituted or unsubstituted alkyl group, a substituted or unsubstituted aromatic group, or a substituted or unsubstituted aromatic heterocyclic group, or two $R^9$s or two $R^{10}$s taken together may form a substituted or unsubstituted, saturated or unsaturated aliphatic ring; each $R^{14}$ is independently a hydrogen atom, an alkyl group having 1 to 6 carbon atoms, an alkoxy group having 1 to 6 carbon atoms, a substituted or unsubstituted aromatic group, or a halogen atom; and Z is an anionic ligand selected from the group consisting of $F^-$, $Cl^-$, Br-, $I^-$, $N_3^-$, $CF_3SO_3^-$, p-$CH_3C_6H_4SO_3^-$, $BF_4^-$, $NO_2^-$, $NO_3^-$, $OH^-$, $PF_6^-$, $BPh_4^-$, $SbF_6^-$, $ClO_4^-$, an aliphatic carboxylate, an aromatic carboxylate, an alkoxide, and an aromatic oxide.

Among the cobalt complexes represented by formula (4), specific preferred examples include cobalt complexes represented by the following formulae (4-1) to (4-5).

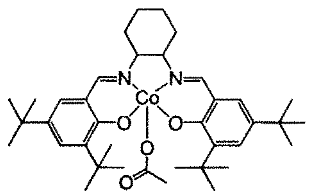

(4-1)

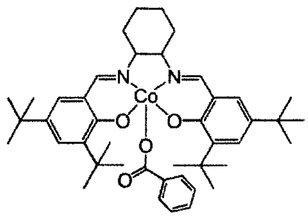

(4-2)

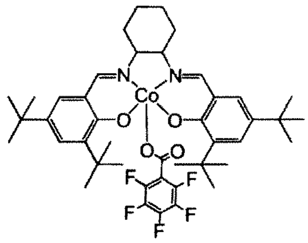

(4-3)

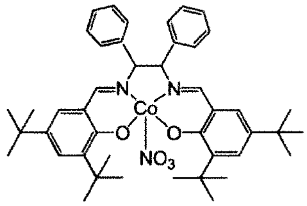

(4-4)

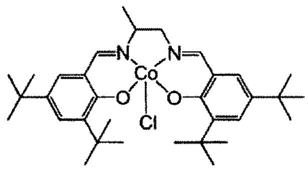

(4-5)

The amount of the metal catalyst used in the polymerization reaction is preferably 0.001 parts by mass or more, and more preferably 0.01 parts by mass or more, based on 100 parts by mass of the epoxide, from the viewpoint of accelerating the progress of the polymerization reaction. Further, the amount is preferably 20 parts by mass or less, and more preferably 10 parts by mass or less, based on 100 parts by mass of the epoxide, from the viewpoint of obtaining effects that are commensurate with the amount used.

The above polymerization reaction may be carried out optionally in the presence of a co-catalyst, in addition to the metal catalyst. Examples of the co-catalyst include bis(triphenylphosphoranylidene) ammonium chloride (PPNCl), piperidine, bis(triphenylphosphoranylidene) ammonium fluoride (PPNF), bis(triphenylphosphoranylidene) ammonium pentafluorobenzoate ($PPNOBzF_5$), tetra-n-butylammonium chloride ($nBu_4NCl$), tetra-n-butylammonium bromide ($nBu_4NBr$), tetra-n-butylammonium iodide ($nBu_4NI$), tetra-n-butylammonium acetate ($nBu_4NOAc$), tetra-n-butylammonium nitrate ($nBu_4NO_3$), triethyl phosphine ($Et_3P$), tri-n-butyl phosphine ($nBu_3P$), triphenyl phosphine ($Ph_3P$), pyridine, 4-methylpyridine, 4-formylpyridine, 4-(N,N-dimethylamino)pyridine, N-methylimidazole, N-ethylimidazole, N-propylimidazole, and the like. Among these, PPNCl, PPNF, $PPNOBzF_5$ and $nBu_4NCl$ are preferred; and PPNCl is more preferred, from the viewpoint of having high reaction activity.

The amount of the co-catalyst used is preferably 0.1 to 10 mol, more preferably 0.3 to 5 mol, and even more preferably 0.5 to 1.5 mol, per mole of the metal catalyst.

In the above polymerization reaction, a reaction solvent may be optionally used. Various organic solvents can be used as the reaction solvent, without particular limitation. Examples of the organic solvent include aliphatic hydrocarbon-based solvents, such as pentane, hexane, octane, and cyclohexane; aromatic hydrocarbon-based solvents, such as benzene, toluene, and xylene; halogenated hydrocarbon-based solvents, such as methylene chloride, chloroform, carbon tetrachloride, 1,1-dichloroethane, 1,2-dichloroethane, chlorobenzene, and bromobenzene; ether-based solvents, such as dimethoxyethane, tetrahydrofuran, 2-methyltetrahydrofuran, 1,4-dioxane, and 1,3-dioxolane; ester-based solvents, such as ethyl acetate, n-propyl acetate, and isopropyl acetate; amide-based solvents, such as N,N-dimethylformamide, and N,N-dimethylacetamide; carbonate-based solvents, such as dimethyl carbonate, ethyl methyl carbonate, diethyl carbonate, and propylene carbonate; and the like.

The amount of the reaction solvent used is preferably from 100 to 10000 parts by mass, based on 100 parts

by mass of the epoxide, to allow the reaction to smoothly proceed.

Examples of the method for carrying out a polymerization reaction of an epoxide and carbon dioxide in the presence of a metal catalyst include, but are not particularly limited to, a method comprising charging an autoclave with an epoxide, a metal catalyst, and optionally a co-catalyst, a reaction solvent, and the like; mixing the contents; and pressurizing the autoclave with carbon dioxide to allow a reaction to proceed.

The amount of carbon dioxide used in the above polymerization reaction is preferably 1 to 10 mol, more preferably 1 to 5 mol, and even more preferably 1 to 3 mol, per mole of the epoxide.

The pressure of carbon dioxide used in the polymerization reaction is not particularly limited, but is preferably 0.1 MPa or more, more preferably 0.2 MPa or more, and even more preferably 0.5 MPa or more, to allow the reaction to smoothly proceed. Further, the pressure is preferably 20 MPa or less, more preferably 10 MPa or less, and even more preferably 5 MPa or less, from the viewpoint of obtaining effects that are commensurate with the pressure used.

The polymerization reaction temperature in the polymerization reaction is not particularly limited, but is preferably 0°C or higher, more preferably 10°C or higher, and even more preferably 20°C or higher, from the viewpoint of shortening the reaction time. Further, the polymerization reaction temperature is preferably 100°C or lower, more preferably 90°C or lower, and even more preferably 80°C or lower, from the viewpoint of controlling side reactions, thereby increasing the yield.

The polymerization reaction time differs depending upon the polymerization reaction conditions. The polymerization reaction time is preferably about 1 to 40 hours.

The following describes a method for synthesizing the aliphatic polycarbonate of the present invention.

As the epoxide usable for forming the constituent unit represented by formula (1), a benzyl amine derivative is one example. The benzyl amine derivative can be produced, for example, by the method shown in the following reaction scheme.

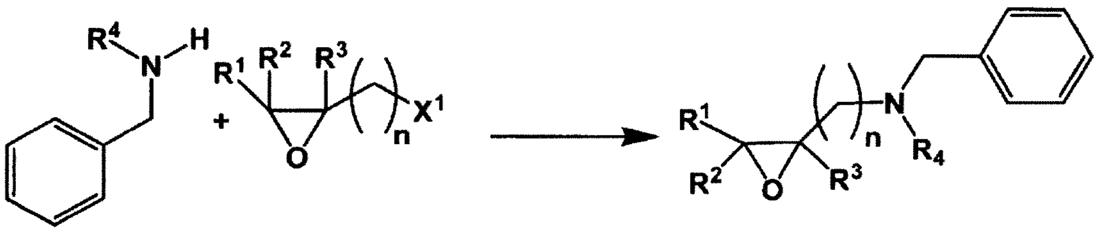

(I) (II) (III)

In the reaction scheme, $X^1$ represents a halogen atom, $R^1$, $R^2$, $R^3$, and $R^4$ are as defined above, and n is as defined above.

The compound represented by formula (I) is reacted with a compound represented by formula (II) to produce a compound represented by formula (III). Hereinafter, the compound represented by formula (I) or the like may be referred to as "compound (I)" or the like.

$X^1$ represents a halogen atom, and preferably represents a chlorine atom or a bromine atom.

This reaction is generally performed in an appropriate solvent in the presence or absence of a basic compound. To allow the reaction to smoothly proceed, the reaction is preferably performed in the presence of a basic compound.

Examples of the solvent include methanol, ethanol, benzene, toluene, xylene, dichloromethane, 1,2-dichloroethane, acetonitrile, N,N-dimethylformamide (DMF), dimethylsulfoxide (DMSO), tetrahydrofuran (THF), and the like.

The amount of compound (II) used is usually at least 1 mol or more, and preferably 1 to 5 mol, per mole of compound (I).

As the basic compound, known organic and inorganic bases can be widely used. Examples of the organic base include triethylamine, diisopropylethylamine, pyridine, 4-dimethylaminopyridine, N-methylmorpholine, tetrabutylammonium bromide, and the like. Examples of the inorganic base include sodium hydride, potassium hydride, calcium hydride, sodium hydroxide, potassium hydroxide, sodium carbonate, potassium carbonate, cesium carbonate, sodium hydrogen carbonate, potassium hydrogen carbonate, and the like. Inorganic bases are preferred because they are easily removable after the reaction.

The amount of the basic compound, when used, is usually at least 1 mol or more, and preferably 1 to 5 mol, per mole of compound (I).

The reaction usually suitably proceeds at about 0 to 70°C (preferably ordinary temperature), and the reaction is usually completed in about 10 to 100 hours.

The produced compound (III) can be purified by chromatography (preferably silica gel column chromatography), distillation, recrystallization, etc.

By polymerizing compound (III), an aliphatic polycarbonate comprising the constituent unit represented by the

above formula (1) can be obtained. An aliphatic polycarbonate may be prepared by polymerizing only compound (III), or by polymerizing compound (III) together with other epoxides.

For example, an aliphatic polycarbonate comprising a constituent unit represented by the above formula (2) in addition to the constituent unit represented by the above formula (1) can be produced as follows.

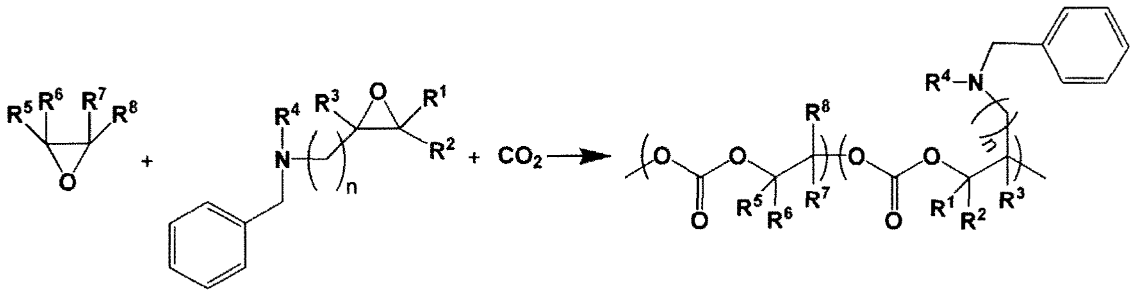

(IV) (III) (V)

In the reaction scheme, $R^1$, $R^2$, $R^3$ and $R^4$ are as defined above, $R^5$, $R^6$, $R^7$ and $R^8$ are as defined above, and n is as defined above.

Compound (V), which is an aliphatic polycarbonate, can be produced by polymerizing compound (III) with compound (IV) and carbon dioxide (the above formula).

As described above, this reaction can be performed in the presence of a metal catalyst. Additionally, a solvent can be used to allow the reaction to smoothly proceed.

The metal catalysts to be used are as defined above.

When a solvent is used, examples of the solvent include aromatic hydrocarbon-based solvents, such as benzene, toluene, and xylene; ether-based solvents, such as diethyl ether, tetrahydrofuran, 1,2-dimethoxyethane, and 1,4-dioxane; carbonate-based solvents, such as dimethyl carbonate, diethyl carbonate, and propylene carbonate; acetonitrile; dimethylformamide; dimethyl sulfoxide; and the like.

Since water may adversely affect the reaction, it is preferable to remove as much water as possible from the reaction system. Examples of the method for removing water include a method of contacting with an adsorbent, and a method of contacting with a reactive desiccant (e.g., calcium hydride, metallic sodium, alkyl zinc, and alkyl aluminum).

The amount of compound (IV) used is preferably at least 1 mol or more, more preferably 1 to 50 mol, and even more preferably 10 to 40 mol, per mole of compound (III). It is preferable to use carbon dioxide in an excess amount, relative to both of these compounds.

The reaction suitably proceeds at about 20 to 70°C (preferably 30 to 50°C), and the reaction is usually completed in about 2 to 48 hours. The reaction is preferably performed under high pressure. For example, the reaction is preferably performed under pressure as high as about 0.5 to 20 MPa, and more preferably about 1 to 10 MPa. For example, the pressure can be increased by introducing carbon dioxide to a reaction vessel. As the reaction vessel, an autoclave is preferably used.

Further, the obtained compound (V) can also be purified using column chromatography, a reprecipitation method, or the like.

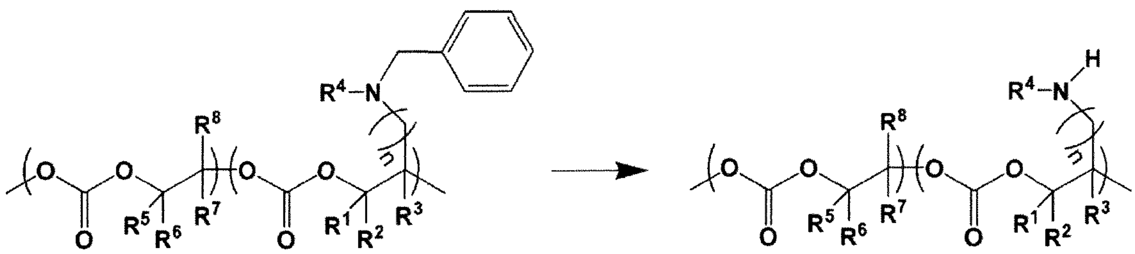

(V) (VI)

In the reaction scheme, $R^1$, $R^2$, $R^3$, and $R^4$ are as defined above; $R^5$, $R^6$, $R^7$, and $R^8$ are as defined above; and n is as defined above.

The amino group-protecting group (benzyl group) is removed from compound (V) to obtain a compound (VI), which is a preferable example of the aliphatic polycarbonate of the present invention (the above reaction scheme). As

described above, the deprotection reaction can be performed by a hydrogenation reaction or oxidation reaction. In the case of a hydrogenation reaction (i.e., a hydrogenolysis reaction), this reaction can be performed by using, for example, palladium carbon as a catalyst in a solvent, and adding hydrogen gas to the reaction system. The reaction can usually be performed at a hydrogen gas pressure of 1 to 300 atms. Examples of the solvent that can be used in the reaction include alcohol-based solvents, such as methanol and ethanol; ester-based solvents, such as ethyl acetate and propyl acetate; ether-based solvents, such as 1,2-dimethoxyethane and THF; and the like. The reaction can usually be performed at about 10 to 60°C, for about 10 to 100 hours.

In the case of an oxidation reaction, the reaction can be performed in a solvent using, for example, cerium ammonium nitrate. Examples of the solvent that can be used in the reaction include alcohol-based solvents, such as methanol and ethanol; ester-based solvents, such as ethyl acetate and propyl acetate; ether-based solvents, such as 1,2-dimethoxyethane and THF; acetonitrile; DMF; DMSO; and water. The reaction can usually be performed at 10 to 60°C for about 2 to 48 hours.

Compound (VI) thus obtained can be purified by column chromatography, a reprecipitation method, or the like.

The aliphatic polycarbonate of the present invention preferably has a number average molecular weight of 2,000 to 1,000,000. The number average molecular weight is preferably 2,000 or more, more preferably 5,000 or more, and even more preferably 8,000 or more, from the viewpoint of dispersibility, when the aliphatic polycarbonate is used as a slurry composition by mixing with inorganic particles. Additionally, the number average molecular weight is preferably 1,000,000 or less, more preferably 500,000 or less, and even more preferably 300,000 or less, from the viewpoint of avoiding the lowering of the handling property due to a reduction in the solubility of the aliphatic polycarbonate in a solvent.

The number average molecular weight of the aliphatic polycarbonate resin is measured by preparing a chloroform solution having an aliphatic polycarbonate resin concentration of 0.5 mass%, and using high-performance liquid chromatography. After measurement, the number average molecular weight of the aliphatic polycarbonate resin is determined by comparison with polystyrene with known number average molecular weight measured under the same conditions. When the aliphatic polycarbonate resin used is an aliphatic polycarbonate resin in which the secondary amino group is protected with a protecting group, the number average molecular weight of the amino group-containing aliphatic polycarbonate resin can be determined, based on the percentage of the constituent unit containing the protecting group in the resin and the molecular weight of the constituent unit. The measurement conditions are as follows:

Column: GPC column
Column temperature: 40°C
Eluate: Chloroform
Flow rate: 1.0 mL/min

As described earlier, the aliphatic polycarbonate of the present invention has a secondary amino group in the side chain, has a relatively low thermal decomposition temperature, and attains excellent storage stability. The thermal decomposition starting temperature of the aliphatic polycarbonate of the present invention is preferably less than 220°C, more preferably less than 180°C, and even more preferably less than 150°C. Further, the mass loss percentage after being maintained at 70°C for 2 hours is preferably 10% or less, more preferably 5% or less, and even more preferably 1% or less, from the viewpoint of inhibiting decomposition by heating during the process before the decomposition step.

The thermal decomposition temperature can be adjusted by varying the content of the constituent unit represented by formula (1), structure of $R^4$, etc.

The thermogravimetric analysis measurement is performed using a thermogravimetric analysis measurement device (e.g., Thermo plus EVO2, produced by Rigaku Corporation). Thermal decomposition behaviors are measured by increasing the temperature from room temperature to a given temperature (350°C), at a heating rate of 10°C/min in a nitrogen atmosphere. The thermal decomposition starting temperature is indicated by the intersection of a line drawn parallel to the abscissa at the mass before the initiation of a heating test, and a tangent line drawn so that an incline between the inflection points in the decomposition curve is at its maximum.

The mass loss percentage is measured by increasing the temperature from room temperature to a given temperature (70°C) at a heating rate of 50°C/min in a nitrogen atmosphere, and the temperature is maintained for a given time (2 hours). The mass loss percentage is obtained by reading off the mass (WI) after two-hour heating from the decomposition curve, and calculating the ratio relative to the initial mass (W0), i.e., [(W0 - W1)/W0 $\times$ 100].

The content of the constituent unit represented by formula (1) in the aliphatic polycarbonate of the present invention is preferably 30% by mole or less, more preferably 20% by mole or less, and even more preferably 12% by mole or less, based on the entire constituent units constituting the aliphatic polycarbonate, from the viewpoint of reducing the residual carbon after thermal decomposition. Further, the content is preferably 0.1% by mole or more, more preferably 1% by mole or more, and even more preferably 3% by mole or more, from the viewpoint of lowering the decomposition temperature. From the above viewpoints, the content of the constituent unit represented by formula (1) is preferably 0.1 to 30% by mole, more preferably 1 to 20% by mole, and even more preferably 3 to 12% by mole, based on the entire

constituent units constituting the aliphatic polycarbonate.

The aliphatic polycarbonate of the present invention, which achieves a reduced residual carbon after sintering, and which can be subjected to a dewaxing treatment at a temperature as low as less than 220°C, is useful as a binder resin used in the production of a sintered body. The use of the aliphatic polycarbonate of the present invention enables a great conservation of energy in the dewaxing step (the step of decomposition by heating).

For this reason, the aliphatic polycarbonate of the present invention can be particularly preferably used as a thermally decomposable resin binder. The present invention also encompasses a thermally decomposable binder comprising the aliphatic polycarbonate of the present invention.

As long as the effect of the present invention is not impaired, the thermally decomposable binder may also comprise other aliphatic polycarbonate(s), i.e., aliphatic polycarbonates that do not contain the constituent unit represented by formula (1), in addition to the aliphatic polycarbonate of the present invention. Examples of the other aliphatic polycarbonates include an aliphatic polycarbonate that contains the constituent unit represented by formula (2), and does not contain the constituent unit represented by formula (1); an aliphatic polycarbonate that consists only of the constituent unit represented by formula (2); polytrimethylene carbonate; polytetramethylene carbonate; poly(1,4-cyclohexanedimethylene)carbonate; and the like. One or two or more kinds of these other aliphatic polycarbonates may be used in combination with the aliphatic polycarbonate of the present invention.

The present invention encompasses a slurry composition containing the aliphatic polycarbonate of the present invention, a solvent capable of dissolving the aliphatic polycarbonate, and inorganic particles.

In the slurry composition, the aliphatic polycarbonate preferably serves as a binder resin. The slurry composition can be said to be a preferable embodiment of the thermally decomposable binder of the present invention. The slurry composition may contain an aliphatic polycarbonate that does not contain the constituent unit represented by formula (1) to an extent that the performance as a thermally decomposable binder is not impaired. Examples of such other aliphatic polycarbonates include the specific carbonates described above.

The content of the constituent unit represented by formula (1) in the entire constituent units constituting the aliphatic polycarbonate contained in the thermally decomposable binder is preferably within the range that is stated above as the content of the constituent unit represented by formula (1) in the aliphatic polycarbonate of the present invention. More specifically, when the entire constituent units constituting the aliphatic polycarbonate contained in the thermally decomposable binder are defined as 100 parts by mole, the upper limit of the content of the constituent unit represented by formula (1) is preferably 30 parts by mole or less, more preferably 20 parts by mole or less, and even more preferably 12 parts by mole or less. The lower limit of the content is preferably 0.1 parts by mole or more, more preferably 1 part by mole or more, and even more preferably 3 parts by mole or more. Of these, the content is preferably 0.1 to 30 parts by mole, more preferably 1 to 20 parts by mole, and even more preferably 3 to 12 parts by mole. The content of the constituent unit represented by formula (1) can be determined by the method described in the "content of the constituent unit represented by formula (1) in the aliphatic polycarbonate" section in the Examples.

For example, when the thermally decomposable binder comprises only the aliphatic polycarbonate of the present invention as an aliphatic polycarbonate, the content of the constituent unit represented by formula (1) in the aliphatic polycarbonate of the present invention is preferably within the above range.

In the case where the aliphatic polycarbonate contains the aliphatic polycarbonate of the present invention and other aliphatic polycarbonate(s), the content of the constituent unit represented by formula (1) in the entire constituent units including a plurality of aliphatic polycarbonates contained in the thermally decomposable binder is preferably in the above range.

The same applies to the case where the slurry composition contains only the aliphatic polycarbonate of the present invention as an aliphatic polycarbonate, and the case where the slurry composition contains the aliphatic polycarbonate of the present invention and other aliphatic polycarbonate(s).

Examples of solvents that are capable of dissolving the aliphatic polycarbonate are not particularly limited, and include toluene, ethyl acetate, butyl acetate, isopropyl alcohol, tert-butyl alcohol, methyl isobutyl ketone, methyl ethyl ketone, N-methyl-2-pyrrolidone, ethylene glycol ethyl ether, ethylene glycol monobutyl ether, ethylene glycol monoethyl ether acetate, diethylene glycol monoethyl ether, diethylene glycol monomethyl ether, diethylene glycol monoisobutyl ether, trimethyl pentanediol monoisobutyrate, ethyl carbitol, butyl carbitol, ethyl carbitol acetate, butyl carbitol acetate, terpineol, terpineol acetate, dihydro terpineol, dihydro terpineol acetate, texanol, isophorone, butyl lactate, dioctyl phthalate, dioctyl adipate, benzyl alcohol, phenylethylene glycol, cresol, anisole, N,N-dimethylformamide, propylene carbonate, and the like. Of these, N-methyl-2-pyrrolidone, terpineol, terpineol acetate, ethyl carbitol acetate, anisole, and propylene carbonate are preferable, because they have a moderately high boiling point, and are likely to be uniformly volatilized during sintering. These organic solvents may be used singly, or in a combination of two or more. As long as the aliphatic polycarbonate can be dissolved, a solvent that is incapable of dissolving the aliphatic polycarbonate can be used together with the organic solvent.

The content of the solvent in the slurry composition of the present invention is preferably 100 to 2000 parts by mass, more preferably 200 to 1500 parts by mass, and even more preferably 300 to 1000 parts by mass, based on 100

parts by mass of the aliphatic polycarbonate (when other aliphatic polycarbonate(s) are also contained in addition to the aliphatic polycarbonate of the present invention, then the total of all of the aliphatic polycarbonates), from the viewpoint of ease of handling the composition to be obtained.

The inorganic particles used in the slurry composition of the present invention are not particularly limited, but are preferably at least one member selected from the group consisting of electroconductive particles, ceramic powders, glass powders, and inorganic phosphor particles.

Examples of the electroconductive particles include metal particles made of, for example, copper, iron, nickel, palladium, platinum, gold, silver, aluminum, tungsten, alloys thereof, and the like.

Examples of the ceramic powders include powders of alumina, zirconia, titanium oxide, barium titanate, aluminum nitride, silicon nitride, boron nitride, silicon carbide, and the like. In addition, nano-ITO (tin-doped indium oxide) usable in transparent electrode materials, nano-titanium oxide usable in dye-sensitized solar cells, and the like can also be suitably used.

Examples of the glass powders include glass powders made of, for example, various silicon oxides, such as $CaO-Al_2O_3-SiO_2$ system, $MgO-Al_2O_3-SiO_2$ system, and $LiO_2-Al_2O_3-SiO_2$ system; powders of bismuth oxide glass, silicate glass, lead glass, zinc glass, and boron glass; and the like.

Examples of the glass powders also include glass powders made of a $PbO-B_2O_3-SiO_2$ mixture, a $BaO-ZnO-B_2O_3-SiO_2$ mixture, a $ZnO-Bi_2O_3-B_2O_3-SiO_2$ mixture, a $Bi_2O_3-B_2O_3-BaO-CuO$ mixture, a $Bi_2O_3-ZnO-B_2O_3-Al_2O_3-SrO$ mixture, a $ZnO-Bi_2O_3-B_2O_3$ mixture, a $Bi_2O_3-SiO_2$ mixture, a $P_2O_5-Na_2O-CaO-BaO-Al_2O_3-B_2O_3$ mixture, a $P_2O_5-SnO$ mixture, a $P_2O_5-SnO-B_2O_3$ mixture, a $P_2O_5-SnO-SiO_2$ mixture, a $CuO-P_2O_3-RO$ mixture, an $SiO_2-B_2O_3-ZnO-Na_2O-Li_2O-NaF-V_2O_5$ mixture, a $P_2O_5-ZnO-SnO-R_2O-RO$ mixture, a $B_2O_3-SiO_2-ZnO$ mixture, a $B_2O_3-SiO_2-Al_2O_3-ZrO_2$ mixture, an $SiO_2-B_2O_3-ZnO-R_2O-RO$ mixture, an $SiO_2-B_2O_3-Al_2O_3-RO-R_2O$ mixture, an $SrO-ZnO-P_2O_5$ mixture, an $SrO-ZnO-P_2O_5$ mixture, a $BaO-ZnO-B_2O_3-SiO_2$ mixture, and the like. Here, R represents an element selected from the group consisting of Zn, Ba, Ca, Mg, Sr, Sn, Ni, Fe, and Mn.

Examples of the phosphor fine particles include $BaMgAl_{10}O_{17}$:Eu, $Zn_2SiO_4$:Mn, (Y,Gd)$BO_3$:Eu, and the like.

The aliphatic polycarbonate of the present invention can be subjected to dewaxing even in a non-oxidizing atmosphere; therefore, the aliphatic polycarbonate of the present invention is suitably used by mixing with inorganic particles, for which dewaxing is preferably performed in a non-oxidizing atmosphere to prevent reaction with oxygen.

The content of the aliphatic polycarbonate in the slurry composition is preferably 0.1 parts by mass or more, more preferably 1 part by mass or more, and even more preferably 5 parts by mass or more, based on 100 parts by mass of the inorganic particles, from the viewpoint of avoiding a reduction in dispersibility of the inorganic particles; thereby avoiding agglomeration of the inorganic particles in molding, since the agglomeration of the inorganic particles in molding deteriorates the performance of the resulting sintered bodies. The content is preferably 30 parts by mass or less, more preferably 20 parts by mass or less, and even more preferably 15 parts by mass or less, from the viewpoint of avoiding a reduction in ease of handling of the slurry composition. The content of the aliphatic polycarbonate as used herein does not only refer to the content of the aliphatic polycarbonate of the present invention, but also refers to the total content of two or more aliphatic polycarbonate resins if used in combination.

The content of the inorganic particles in the slurry composition of the present invention is preferably 10 to 90% by mass, and more preferably 30 to 80% by mass.

The slurry composition of the present invention may optionally further comprise additives.

Examples of the additives include adhesion accelerators, surfactants, plasticizers, storage stabilizers, defoaming agents, and the like.

Examples of the adhesion accelerators include amine-based silane coupling agents, glycidyl-based silane coupling agents, and the like. Examples of the surfactants include polyoxyethylene-based surfactants, fatty acid ester-based surfactants, and the like. Examples of the plasticizers include polyether-polyols, phthalic acid esters, and the like. Examples of the storage stabilizers include amine compounds, carboxylic acid compounds, phosphorus compounds, sulfur compounds, triazole-based compounds, and the like. Examples of the defoaming agents include hydrophobic silicas, polyalkylene derivatives, polyether derivatives, and the like.

The content of the additives in the slurry composition is preferably 50 parts by mass or less, and more preferably 30 parts by mass or less, based on 100 parts by mass of the inorganic particles.

The method for preparing the slurry composition of the present invention is not limited, and examples include a method comprising mixing an aliphatic polycarbonate, a solvent, inorganic particles, and optionally an additive, while stirring by using a conventionally known stirring method.

Examples of the known stirring method include a method of kneading with an apparatus, such as a planetary centrifugal mixer, a ball-mill, a Brabender mill, or a three-roll mill; a method of kneading with a mortar; and the like.

The slurry composition of the present invention is molded, and then sintered and dewaxed to thus obtain a molded article. In the sintering step, the aliphatic polycarbonate of the present invention can be thermally decomposed by low-temperature heating, and removed.

## Examples

The present invention is described in more detail with reference to Examples. However, the present invention is not limited to these Examples. The physical properties etc. of the aliphatic polycarbonate and the like were measured in accordance with the following methods.

### Content of Constituent Unit Represented by Formula (1) in Aliphatic Polycarbonate

The compositional ratio of the constituent units in the resin is analyzed by $^1$H-NMR, and the secondary amino group content in the aliphatic polycarbonate is determined as the content of the constituent unit represented by formula (1).
The aliphatic polycarbonate is subjected to $^1$H-NMR measurement in deuterated chloroform at 25°C. Then, an integral value (A) of the peak appeared near 5.0 ppm, ascribed to the methine group adjacently attached to the carbonate group, and an integral value (B) of the peak appeared near 2.4 ppm, ascribed to the methylene group adjacently attached to the secondary amino group are determined; and the amino group content is calculated using the following calculation formula.

$$\text{Amino group content (\% by mole)} = B/(2 \times A) \times 100$$

If the secondary amino group content is small, calculation using the above method could be difficult. In this case, assuming that the amount of amino group would not change in the step of obtaining an amino group-containing polycarbonate resin from an amino group-containing polycarbonate resin precursor whose amino group is protected, the precursor is subjected to $^1$H-NMR measurement in deuterated chloroform at 25°C, and an integral value (C) of peaks ascribed to groups contained in a protective group and an integral value (D) of peaks ascribed to groups contained in constituent units not containing a protective group are determined to calculate the amino group content using the following calculation formula. For example, in the case of Example 1 (wherein the protective group is a benzyl group), the integral value (C) of the peak appeared near 3.7 to 3.5 ppm, ascribed to the methylene group adjacently attached to the phenyl group and the integral value (D) of the peak appeared near 1.4 to 1.3 ppm, ascribed to the methyl group are used.

$$\text{Amino group content (\% by mole)} = 3 \times C/(3 \times C + 2 \times D) \times 100$$

If the amino group content is small, calculation using the above method could be difficult. In this case, the amino group content can be calculated based on an integral value of peaks ascribed to $R^4$ in formula (1).

### Number Average Molecular Weight (Mn) of Aliphatic Polycarbonate

A chloroform solution having an aliphatic polycarbonate concentration of 0.5% by mass is prepared, and subjected to measurement using high-performance liquid chromatography. After measurement, the number average molecular weight is determined by comparison with polystyrene with known number average molecular weight measured under the same conditions. The measurement conditions are as follows:

Column: GPC column (trade name: Shodex K-804L, produced by Showa Denko K.K.)
Column temperature: 40°C
Eluate: Chloroform
Flow rate: 1.0 mL/min

### Thermal Decomposition Starting Temperature of Aliphatic Polycarbonate

Thermal decomposition behaviors are measured by increasing the temperature from room temperature to 350°C at a heating rate of 10°C/min in a nitrogen atmosphere, using Thermo plus EVO2 produced by Rigaku Corporation. The thermal decomposition starting temperature is indicated by the intersection of a line drawn parallel to the abscissa at the mass before the initiation of a heating test, and a tangent line drawn so that an incline between the inflection points in the decomposition curve is at its maximum.

Mass Loss Percentage of Aliphatic Polycarbonate Resin After Being Maintained at a Given Temperature

The temperature is increased from room temperature to a given temperature (70°C) at a heating rate of 50°C/min in a nitrogen atmosphere, using Thermo plus EVO2 produced by Rigaku Corporation; and then the temperature is maintained for a given time (2 hours), followed by the measurement of thermal decomposition behaviors. The mass loss percentage is obtained by reading off the mass (W1) after two-hour heating from the decomposition curve, and calculating the ratio relative to the initial mass (W0), i.e., [(W0 - W1)/W0 $\times$ 100].

Production Example 1: Production of Cobalt Complex Catalyst

A 100-mL eggplant flask equipped with a stirrer and a gas inlet tube was charged with 0.30 g (8.3 mmol) of N,N'-bis(3,5-di-tert-butylsalicylidene)-1,2-cyclohexanediaminocobalt (produced by Aldrich), 0.10 g (8.5 mmol) of pentafluorobenzoic acid, and 13.3 g of dichloromethane; and the contents were stirred for 19 hours while introducing air thereinto. The volatile component was distilled off under reduced pressure, thus obtaining a cobalt complex represented by the above formula (4-3) as a brown solid (yield amount: 0.35 g, yield rate: 88%).

Production Example 2a: Production of secondary amino group-containing epoxide protected by a benzyl group

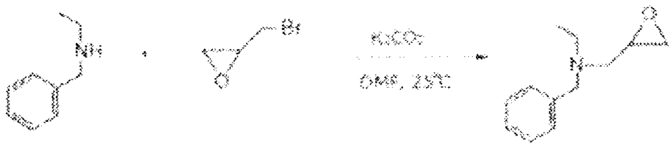


A 50-mL Schlenk flask containing a magnetic stirring bar was charged with 865 mg (6.3 mmol) of potassium carbonate. Then, after the internal system was replaced with an argon atmosphere, the system was charged with 9.4 g of N,N-dimethylformamide (DMF), 0.72 g (5.3 mmol) of N-benzyl-N-ethylamine, and 8.5 g (62 mmol) of epibromohydrin. After the resulting mixture was stirred at ordinary temperature for 48 hours, and extracted 3 times with 13.3 g of dichloromethane, the combined organic layers were washed twice with 30 g of saturated brine, and once with ion exchanged water. The organic layers were concentrated under reduced pressure, and the obtained residue was purified by silica gel column chromatography (n-hexane/ethyl acetate = 4/1 (v/v), Rf = 0.53) to give a colorless oily N-benzyl-N-oxiranylmethyl-N-ethylamine (yield amount: 0.93 g, yield rate: 91%).

The structure of the obtained compound was identified by $^1$H-NMR.

$^1$H-NMR ($CDCl_3$) $\delta$ = 7.14-7.06 (m, 5H), 3.62 (s, 2H), 2.77 (m, 1H), 2.63-2.60 (m, 2H), 2.40-2.35 (m, 4H), 1.01 (t, 3H) ppm.

Production Example 2b

The operation was carried out in the same manner as in Production Example 2a, except that N-benzyl-N-isopropylamine was used as amine, to give colorless oily N-benzyl-N-oxiranylmethyl-N-isopropylamine (yield amount: 1.00 g, yield rate: 92%).

The structure of the obtained compound was identified by $^1$H-NMR.

$^1$H-NMR ($CDCl_3$)$\delta$ = 7.30-7.20 (m, 5H), 3.66 (s, 2H), 2.96 (m, 1H), 2.77 (m, 1H), 2.65-2.61 (m, 2H), 2.40-2.35 (m, 2H), 1.05 (d, 6H) ppm.

Production Example 2c

The operation was carried out in the same manner as in Production Example 2a, except that N-benzyl-N-tert-butylamine was used as amine, to give colorless oily N-benzyl-N-oxiranylmethyl-N-tert-butylamine (yield amount: 0.77 g, yield rate: 66%).

The structure of the obtained compound was identified by $^1$H-NMR.

$^1$H-NMR ($CDCl_3$)$\delta$ = 7.32-7.25 (m, 5H), 3.62 (s, 2H), 2.77 (m, 1H), 2.63-2.61 (m, 2H), 2.40-2.35 (m, 2H), 1.10 (s, 9H) ppm.

Example 1a: Production of Secondary Amino Group-Containing Aliphatic Polycarbonate Precursor

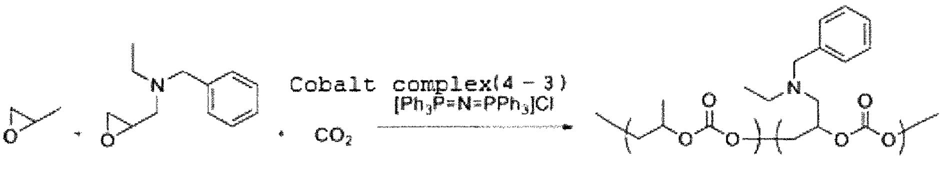


A 50-mL autoclave was charged with 12 mg (0.014 mmol) of the cobalt complex obtained in Production Example 1, 8.2 mg (0.014 mmol) of bis(triphenylphosphoranylidene)ammonium chloride, and 0.53 g (2.8 mmol) of N-benzyl-N-oxiranylmethyl-N-ethylamine. After the internal system was replaced with an argon atmosphere, the system was charged with 1.4 g (28 mmol) of propylene oxide. Next, carbon dioxide was added thereto while stirring until the internal reaction system reached 1.5 MPa. Thereafter, the polymerization reaction was carried out at 25°C for 6 hours. After completion of the reaction, the autoclave was depressurized, 1.0 g of methanol/1 M hydrochloric acid (10/1, v/v) was added thereto, and the reaction was stopped. Thereafter, 6.5 g of dichloromethane was added to dissolve the contents, and the resulting product was added dropwise to 100 g of methanol to precipitate a white solid. The obtained white solid was collected by filtration, and dried under reduced pressure to give 0.52 g of a secondary amino group-containing aliphatic polycarbonate precursor. The structure of the obtained aliphatic polycarbonate was identified by $^1$H-NMR.
$^1$H-NMR ($CDCl_3$)δ = 7.30-7.23 (m, 5H), 5.05-4.93 (m, 1H), 4.31-4.08 (m, 2H), 3.71-3.53 (m, 2H), 2.69-2.64 (m, 2H), 2.59-2.50 (m, 2H), 1.35-1.32 (m, 3H-), 1.03 (t, 3H) ppm.

Example 2a

Production of Secondary Amino Group-Containing Aliphatic Polycarbonate

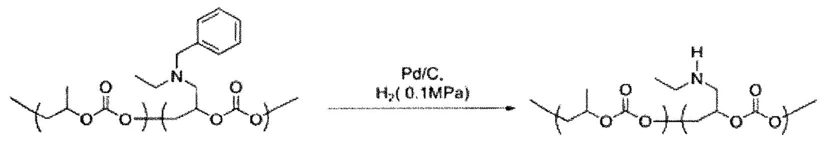


A 100-mL Schlenk flask was charged with 0.52 g of the secondary amino group-containing aliphatic polycarbonate precursor obtained in Production Example 1a, 0.13 g of 10% palladium carbon, 4.0 g of ethyl acetate, and 2.0 g of methanol, followed by freeze-pump-thaw. Thereafter, the inside of the reaction vessel was replaced with hydrogen, and the contents were stirred at room temperature under 1 atmosphere of hydrogen for 24 hours. The solid was then removed by filtration, the filtrate obtained was concentrated, and the concentrated filtrate was poured into 100 g of methanol to precipitate a solid. The obtained solid was dried to give 0.43 g of a secondary amino group-containing aliphatic polycarbonate. The obtained aliphatic polycarbonate had a number average molecular weight of 7100, and the content of secondary amino group was 1.5% by mole. The thermal decomposition starting temperature was 217°C, and the mass loss after being maintained at 70°C for 2 hours was 0.1%. The structure of the obtained aliphatic polycarbonate was identified by $^1$H-NMR.
$^1$H-NMR($CDCl_3$)δ= 5.05-4.96 (m, 1H), 4.31-4.09 (m, 2H), 2.40-2.37 (m, 4H), 1.35-1.32 (m, 3H), 1.26 (t, 3H).

Example 1b

The operation was carried out in the same manner as in Example 1a, except that N-benzyl-N-oxiranylmethyl-N-isopropylamine was used in place of N-benzyl-N-oxiranylmethyl-N-ethylamine to give 0.88 g of a secondary amino group-containing aliphatic polycarbonate precursor. The structure of the obtained aliphatic polycarbonate precursor was identified by $^1$H-NMR. $^1$H-NMR ($CDCl_3$)δ = 7.30-7.23 (m, 5H), 5.05-4.93 (m, 1H), 4.31-4.08 (m, 2H), 3.69-3.57 (m, 2H), 2.95-2.87 (m, 1H), 2.69-2.64 (m, 2H), 1.35-1.31 (m, 3H), 1.02-0.97 (m, 6H) ppm.

Example 2b

The operation was carried out in the same manner as in Example 2a to give 0.71 g of a secondary amino group-containing aliphatic polycarbonate. The obtained aliphatic polycarbonate had a number average molecular weight of 2700, and the content of secondary amino group was 1.9% by mole. The thermal decomposition starting temperature was 178°C, and the mass loss after being maintained at 70°C for 2 hours was 0.3%. The structure of the obtained

aliphatic polycarbonate was identified by $^1$H-NMR. $^1$H-NMR ($CDCl_3$) $\delta$ = 5.04-4.92 (m, 1H), 4.31-4.09 (m, 2H), 2.31-2.25 (m, 2H), 1.35-1.32 (m, 3H), 1.22-1.17 (m, 6H) ppm.

Example 1c

The operation was carried out in the same manner as in Example 1a, except that N-benzyl-N-oxiranylmethyl-N-tert-butylamine was used in place of N-benzyl-N-oxiranylmethyl-N-ethylamine to give 1.31 g of a secondary amino group-containing aliphatic polycarbonate precursor. The structure of the obtained aliphatic polycarbonate precursor was identified by $^1$H-NMR. $^1$H-NMR ($CDCl_3$) $\delta$ = 7.31-7.20 (m, 5H), 5.05-4.93 (m, 1H), 4.31-4.08 (m, 2H), 3.85-3.66 (m, 2H), 2.90-2.70 (m, 2H), 1.35-1.31 (m, 3H), 1.12 (s, 9H) ppm.

Example 2c

The operation was carried out in the same manner as in Example 2a to give 1.05 g of a secondary amino group-containing aliphatic polycarbonate. The obtained aliphatic polycarbonate had a number average molecular weight of 5800, and the content of secondary amino group was 0.5% by mole. The thermal decomposition starting temperature was 138°C, and the mass loss after being maintained at 70°C for 2 hours was 0.2%. The structure of the obtained aliphatic polycarbonate was identified by $^1$H-NMR. $^1$H-NMR ($CDCl_3$) $\delta$ = 5.04-4.96 (m, 1H), 4.31-4.09 (m, 2H), 1.35-1.32 (m, 3H), 1.09 (s, 9H) ppm.

Examples 1d and 1e and Examples 2d and 2e

The operation was carried out in the same manner as in Examples 1b and 2b, except that the amount of N-benzyl-N-oxiranylmethyl-N-isopropylamine was changed, to give a secondary amino group-containing aliphatic polycarbonate.

Comparative Example 1

The reaction was carried out in the same manner as in Example 1a, except that propylene oxide alone was used as epoxide in the polymerization reaction to give 1.42 g of aliphatic polycarbonate free of amino group. The obtained aliphatic polycarbonate had a number average molecular weight of 67000. The thermal decomposition starting temperature was 240°C, and the mass loss after being maintained at 70°C for 2 hours was 0.1%.

Comparative Example 2

The following operation was carried out with reference to the method described in Example 2 of JP Patent No. 5781939.

0.2 g of polypropylene carbonate obtained in Comparative Example 1 was added to a solution in which 0.0002 g of tetrabutylammonium acetate was dissolved in 1 g of acetone, and mixed uniformly. The obtained solution was dried with a vacuum dryer at 20°C for 12 hours, to give 0.2 g of polypropylene carbonate containing 1000 ppm of a quaternary ammonium salt. The thermal decomposition starting temperature of the obtained polypropylene carbonate was 140°C, and the mass loss after being maintained at 70°C for 2 hours was 52%.

Table 1 shows the number average molecular weight, secondary amino group content (content of structural unit represented by formula (1)), thermal decomposition starting temperature, and mass loss percentage after being maintained at 70°C for 2 hours of aliphatic polycarbonate obtained in each of the Examples and Comparative Examples. Fig. 1 shows the pyrolysis curves obtained in Example 2c and Comparative Example 1.

Table 1

| | Secondary amino group-containing aliphatic polycarbonate | | | | |
|---|---|---|---|---|---|
| | Structure of $R^4$ | Mn | Content of structural unit of formula (1) | Thermal decomposition starting temperature | Mass loss percentage (70°C, 2 hours) |
| Example 2a | group | 7100 | 1.5% by mole | 217°C | 0.1% |
| Example 2b | Isopropyl group | 2700 | 1.9% by mole | 178°C | 0.3% |

(continued)

| | Secondary amino group-containing aliphatic polycarbonate | | | | |
|---|---|---|---|---|---|
| | Structure of $R^4$ | Mn | Content of structural unit of formula (1) | Thermal decomposition starting temperature | Mass loss percentage (70°C, 2 hours) |
| Example 2c | Tert-butyl group | 5800 | 0.5% by mole | 138°C | 0.2% |
| Example 2d | Isopropyl group | 2800 | 11.1% by mole | 170°C | 0.2% |
| Example 2e | Isopropyl group | 4000 | 8.3% by mole | 172°C | 0.1% |
| Comparative Example 1 | - | 67000 | - | 240°C | 0.1% |
| Comparative Example 2 | - | 67000 | - | 140°C | 52% |

Table 1 clearly indicates that the decomposition of the secondary amino group-containing aliphatic polycarbonate starts at a temperature significantly lower than the temperature of the aliphatic polycarbonate free of a secondary amino group; and that the decomposition does not occur even when the secondary amino group-containing aliphatic polycarbonate is maintained at 70°c. Table 1 also indicates that as the substituent on the amine becomes bulkier, the decomposition starting temperature is reduced. On the other hand, as reported before, the aliphatic polycarbonate containing a quaternary ammonium salt has a decomposition starting temperature as low as 140°c; however, when the aliphatic polycarbonate is maintained at 70°c, the weight is significantly reduced, indicating that decomposition starts. Accordingly, the aliphatic polycarbonate of the present invention has a low-temperature decomposition property, and is not decomposed even when maintained at 70°c, and thus has excellent storage stability.

Example 3a: Preparation of Slurry Composition

A solution prepared by dissolving 0.2 g of the aliphatic polycarbonate obtained in Example 2a and 0.04 g of dioctyl phthalate as a plasticizer in 0.76 g of benzyl alcohol was charged with 4.0 g of alumina (AL160SG-3, produced by Showa Denko). The mixture was stirred with a planetary centrifugal mixer (Awatori Rentaro ARE-310, produced by Thinky Corporation) to give an alumina slurry.

Example 3b

A solution prepared by dissolving 0.2 g of the aliphatic polycarbonate obtained in Example 2b in 0.8 g of N-methylpyrrolidine was added to 4.0 g of silver particles (S-211A produced by Daiken Chemical Co., Ltd.) while kneading in a mortar for 1 hour, to give a silver slurry.

Industrial Applicability

The aliphatic polycarbonate of the present invention is suitably used as a binder for molding inorganic particles, such as electroconductive fine particles, ceramic powders, glass powders, ceramics, and inorganic phosphors, a thermally decomposable material for lost-foam casting, etc.

## Claims

1. An aliphatic polycarbonate having a secondary amino group in a side chain.

2. The aliphatic polycarbonate according to claim 1, which comprises a constituent unit represented by formula (1):

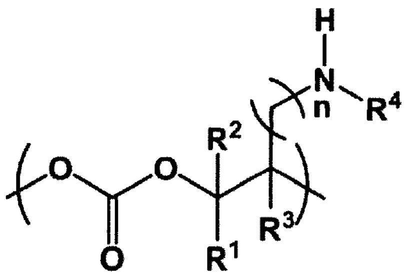

(1)

wherein $R^1$, $R^2$, and $R^3$ are identical or different, and each represent a hydrogen atom, a substituted or unsubstituted alkyl group having 1 to 15 carbon atoms, or a substituted or unsubstituted aryl group having 6 to 20 carbon atoms; $R^4$ represents a substituted or unsubstituted alkyl group having 1 to 20 carbon atoms, or a substituted or unsubstituted aryl group having 6 to 20 carbon atoms; and n is an integer of 0 to 3.

3. The aliphatic polycarbonate according to claim 1 or 2, which further comprises a constituent unit represented by formula (2) :

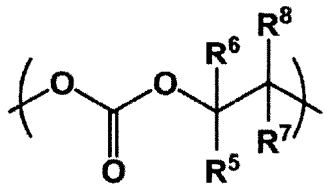

(2)

wherein $R^5$, $R^6$, $R^7$, and $R^8$ are identical or different, and each represent a hydrogen atom, a substituted or unsubstituted alkyl group having 1 to 15 carbon atoms, or a substituted or unsubstituted aryl group having 6 to 20 carbon atoms, wherein two groups from among $R^5$ to $R^8$, taken together with the carbon atom or carbon atoms to which these groups are attached, may form a substituted or unsubstituted, saturated or unsaturated aliphatic ring.

4. The aliphatic polycarbonate according to any one of claims 1 to 3, wherein the proportion of the constituent unit represented by formula (1) is 0.1% by mole or more to 30% by mole or less, based on the entire constituent units constituting the aliphatic polycarbonate.

5. The aliphatic polycarbonate according to any one of claims 1 to 4, wherein $R^4$ is a secondary or tertiary alkyl group having 3 to 20 carbon atoms.

6. The aliphatic polycarbonate according to any one of claims 1 to 5, wherein n is 1.

7. A thermally decomposable binder comprising the aliphatic polycarbonate according to any one of claims 1 to 6.

8. A slurry composition comprising the aliphatic polycarbonate according to any one of claims 1 to 6, a solvent, and inorganic particles.

Fig. 1

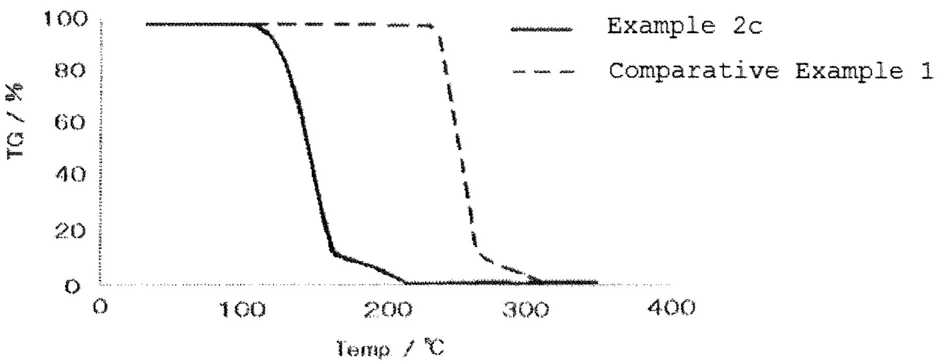
100
80
60
40
20
0
TG / %
0
100
200
300
400
Temp / ℃
Example 2c
Comparative Example 1

## INTERNATIONAL SEARCH REPORT

International application No. PCT/JP2018/032541

A. CLASSIFICATION OF SUBJECT MATTER
Int.Cl. C08G64/02(2006.01)i, C08K3/00(2018.01)i, C08L69/00(2006.01)i

According to International Patent Classification (IPC) or to both national classification and IPC

B. FIELDS SEARCHED

Minimum documentation searched (classification system followed by classification symbols)
Int.Cl. C08G63/00-64/42, C08L1/00-101/14, C08K3/00-13/08

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X<br>A | US 2016/0095933 A1 (INTERNATIONAL BUSINESS MACHINES CORPORATION) 07 April 2016, claims, paragraphs [0045]-[0201] & JP 2017-535633 A & WO 2016/055880 A1 & EP 3204441 A1 | 1, 4-6, 8<br>2, 3, 7 |
| X<br>A | CN 105348505 A (ANHUI XINGXIN CHEMICAL TECHNOLOGY CO., LTD.) 24 February 2016, claims, paragraphs [0006]-[0016] (Family: none) | 1, 4-6<br>2, 3, 7, 8 |
| A | JP 2008-285545 A (TOKYO UNIVERSITY OF SCIENCE) 27 November 2008, entire text (Family: none) | 1-8 |
| P, A | WO 2017/170079 A1 (TOKYO UNIVERSITY OF AGRICULTURE AND TECHNOLOGY) 05 October 2017, entire text & TW 201807012 A | 1-8 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>26 November 2018 (26.11.2018) | Date of mailing of the international search report<br>04 December 2018 (04.12.2018) |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5781939 B
- JP 2010106286 A